# EUROPEAN PATENT SPECIFICATION

(11) **EP 0 671 321 B1**
(45) Date of publication and mention of the grant of the patent: **15.10.1997**
(21) Application number: 95200033.9
(22) Date of filing: 10.01.1995
(51) Int. Cl.: B63H 23/32, F16J 15/40

(54) **Rear sealing with grease lubrication for screw shaft pipe**
Abdichtung mit Fettschmierung für Stevenrohre
Joint d'étanchéité avec lubrification de graisse pour les tubes d'étambot

(30) Priority: 11.03.1994 NL 9400386
(43) Date of publication of application: 13.09.1995
(73) Proprietor: IHC HOLLAND N.V., NL-3361 EP Sliedrecht (NL)
(72) Inventor: Visser, Teunis, NL-3361 GB Sliedrecht (NL)
(74) Representative: Lips, Hendrik Jan George, Ir.

(56) References cited:
- EP-A- 0 021 243
- EP-A- 0 335 368
- GB-A- 2 062 125
- MARINE ENGINEERS REVIEW, July 1990 LONDON, page 33 XP 000138523 'Pollution-free stern tube sealing '
- SCHIFF & HAFEN, vol. 37, no. 1, January 1985 HAMBURG, pages 83-84, G.MEWES 'SIMPLEX-COMPACT-Abdichtung, eine Stevenrohrabdichtung setzt Massstäbe'

## Description

The invention relates to a sealing assembly for sealing the end of a screw shaft as this is described in the preamble of the main claim.

Such a sealing assembly is known by EP-A-0 021 243. In case of this known assembly the chamber to which grease is supplied at one side is formed by a sealing ring composed of a body and a lip extending inwards to the shaft and at the other side by a sealing ring formed by a gland which is a relatively expensive part. Further seperate means have to be present to press the abutting surfaces of the gland against each other.

When the pressure in the chamber becomes too high the lip of the sealing ring will be lifted too much from the shaft so that no optimal sealing will be obtained under various conditions.

Now the object of the invention is to raise these disadvantages and to that end the features are applied as these are described in the characterizing portion of the main claim.

Operation of the complete sealing assembly can be improved yet further in that between the chamber sealing ring facing the screw, and the screw, a further sealing ring is situated, the lip of which is facing the screw and in which the overflow area established between both these sealing rings communicates with the chamber to which the grease is supplied, by means of a by-pass duct provided with a check valve, in such a way, that grease can be forced from the chamber to the overflow area, while the overflow area communicates with the water outboard by means of a by-pass duct likewise provided with a check valve, which check valve can only be opened towards the water.

In particular the connections of the by-pass duct or ducts, seen in cross-section, will be offset in relation to each other and in relation to the connection for the supply of grease to the chamber.

By this, a proper flow of grease through the chamber and the overflow area is achieved.

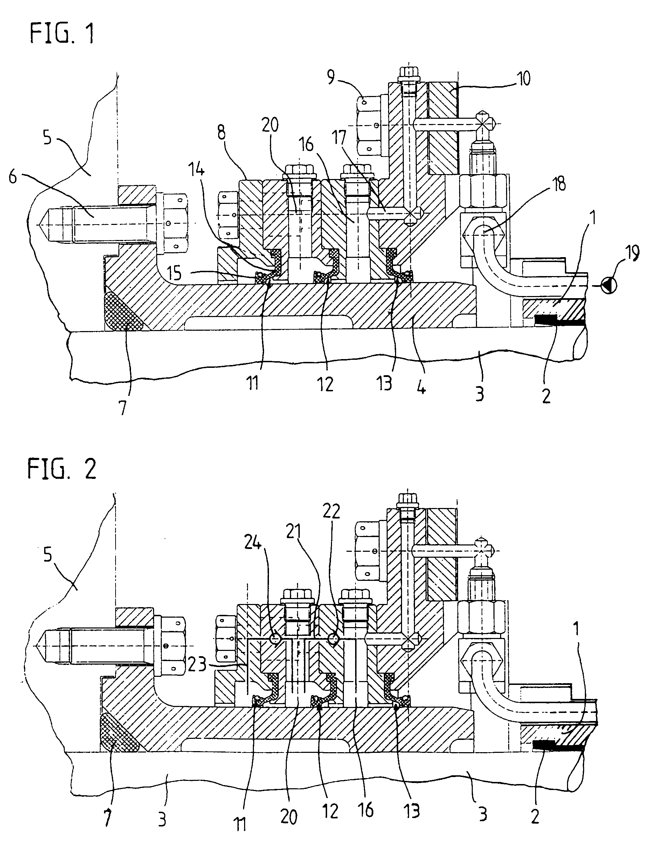

The invention is further explained by way of two embodiments shown in the Figures 1 and 2 of the drawing.

Fig. 1 shows a sealing assembly according to the invention being mounted at the end of a screw shaft pipe 1 in which the bearing 2 is located for supporting the screw shaft 3. On the screw shaft 3 there is the bush 4 to which the screw 5 is fastened by means of bolts 6. By way of the sealing ring 7, entrance of water through the slit between the bush 4 and the screw shaft 3 is counteracted.

Around the bush 4, the housing 8 is mounted, said housing being fixed to the part 10 by means of bolts 9 in a way not further indicated, with said part 10 being directly or indirectly connected to the screw shaft pipe 1 and the hull of the ship. The sealing rings 11, 12 and 13 are located in the housing 8. To that end, the housing 8 will consist of some parts not further indicated which are connected to each other by means of a number of bolts not further indicated.

The sealing rings 11 - 13 each comprise a body 14, by which the ring is fixed to the housing, and a lip 15 lying against the bush 4 with a certain pressure.

Between the sealing rings 12 and 13 there is the chamber 16 in which, at the point 17, the duct 18 opens into, through which grease can be supplied to the chamber 16 by means of a positive-displacement pump 19. From the chamber 16, grease will be forced along the lips 15 of the sealing rings 12 and 13 in order to lubricate the rings concerned. The space 20 between the sealing rings 11 and 12 serves as additional protection of the ring 12 against entrance of water. The space 20 is also for checking the shaft 3 during the periodical maintenance.

With the embodiment according to Fig. 2, substantially the same parts were employed as with the embodiment according to Fig. 1, so that the same reference numbers were used. However, the chamber 16 is connected to the space 20 now serving as overflow area by means of a by-pass duct 21 in which the check valve 22 is situated so that an excess of grease can be forced from the chamber 16 into the space 20 and the lip 15 of the sealing ring 12 will definitely not be lifted. The overflow area 20 is in turn connected to the water outboard by means of a by-pass duct 23. In the duct 23 there is the check valve 24 so that water can not intrude the space 20. Obviously, the duct 23 could be left out and the duct 21 could possibly run directly to the water outboard.

Further, other sealing rings can be mounted at both sides of the sealing rings 11 and 13, and many other modifications can be made without being beyond the inventive idea.

## Claims

1. Sealing assembly for sealing the end of a screw shaft pipe (1) of a ship, directed towards the screw (5), said sealing assembly comprising at least three sealing rings of a first (12,13) and a second (11) type, one sealing of the at least two sealings of the first type being composed of a body (14) being provided with a lip (15) extending obliquely inwards from said body towards and around the screw shaft (3) or a bush (4) mounted on it, said lip being resiliently pressed against the shaft or the bush (4), the assembly having a chamber (16) situated between two of said sealing rings (12,13) of the first type and being connected to a duct (18) to which bio-degradable grease can be continuously supplied by a positive displacement pump (19) having such a capacity that at least the amount of grease, which is discharged to the water, is continually replenished, **characterized in that** also the other sealing ring (12) of the first type forming the chamber (16) comprises a body (14) and a lip (15) extending obliquely from said body towards the screw shaft (3), the lips (15) of both sealing rings of the first type (12,13) being directed such that they can be lifted from the shaft by the pressure in the chamber (16) and that across the one sealing ring (12) of the chamber (16), being the nearest to the screw (5), a by-pass duct (21) is provided with a check valve (22) therein, which is positioned such that from the chamber (16), to which the grease is supplied, grease can be discharged to an overflow area (20) and from this to the water outboard.

2. Sealing assembly according to claim 1, **characterized in that** the overflow area (20) communicates with the water out-board by means of a by-pass duct (23) likewise provided with a check valve (24), which can only be opened towards the water.

3. Sealing assembly according to claim 1 or 2, **characterized in that** the connections of the bypass duct (21) or ducts (21,23), seen in cross section, are offset in relation to each other and in relation to the connection (17) for the supply of grease to the chamber (16).

## Patentansprüche

1. Dichtungsaufbau für das Abdichten des Endes eines Schraubenwellenrohres (1) eines Schiffes, welches zu der Schraube (5) hin gerichtet ist, wobei der Dichtungsaufbau zumindest drei Dichtringe eines ersten (12, 13) und eines zweiten (11) Typs aufweist, wobei eine Dichtung der zumindest zwei Dichtungen des ersten Typs aus einem Hauptteil (14) besteht, der mit einer Lippe (15) versehen ist, die sich schräg einwärts von dem Hauptteil in Richtung der Schraubenwelle (3) oder einer darauf montierten Buchse (4) und darum herum erstreckt, wobei die Lippe federnd gegen die Welle oder die Buchse (4) gedrückt wird, wobei der Aufbau eine Kammer (16) hat, die zwischen zweien der Dichtringe (12, 13) des ersten Typs liegt und die mit einer Leitung (18) verbunden ist, welcher biologisch abbaubares Fett kontinuierlich über eine verdrängerpumpe (19) zugeführt werden kann, die eine solche Kapazität hat, daß zumindest die Menge an Fett, die in das Wasser abgegeben wird, kontinuierlich ersetzt wird, **dadurch gekennzeichnet**, daß auch der andere Dichtring (12) des ersten Typs, welcher die Kammer (16) bildet, einen Körper (14) und eine Lippe (15) aufweist, die sich schräg von dem Körper in Richtung der Schraubenwelle (3) erstreckt, wobei die Lippen (15) beider Dichtringe des ersten Typs (12, 13) so gerichtet sind, daß sie durch den Druck in der Kammer (16) von der Welle angehoben werden können, und daß durch den einen Dichtring (12) der Kammer (16), welcher der Schraube (5) am nächsten liegt, eine Bypss-Leitung (21) mit einem Rückschlagventil (22) darin vorgesehen ist, welches so angeordnet ist, daß von der Kammer (16), welcher das Fett zugeführt wird, Fett in einen Überströmbereich (20) und von dort in das Wasser außenbords abgegeben werden kann.

2. Dichtungsaufbau nach Anspruch 1, dadurch gekennzeichnet, daß der Überströmbereich (20) mit dem Wasser außenbords über eine Bypass-Leitung (23) in Verbindung steht, die ebenso mit einem Rückschlagventil (24) versehen ist, welches nur in Richtung des Wassers geöffnet werden kann.

3. Dichtungsaufbau nach einem der Ansprüche 1 oder 2, dadurch gekennzeichnet, daß die Anschlüsse der Bypass-Leitung (21) oder der Leitungen (21, 23), im Querschnittgesehen, relativ zueinander und relativ zu dem Anschluß (17) für die Zufuhr von Fett in die Kammer (16) versetzt sind.

## Revendications

1. Ensemble d'étanchéité pour rendre hermétiquement étanche l'extrémité d'un tube d'étambot ou d'arbre d'hélice (1) d'un navire, dirigé vers l'hélice (5), cet ensemble d'étanchéité comprenant au moins trois anneaux d'étanchéité d'un premier type (12, 13) et d'un second type (11), une étanchéité d'au moins les deux étanchéités du premier type étant composée d'un corps (14) munie d'une lèvre (15) s'étendant obliquement vers l'intérieur à partir du corps vers et autour de l'arbre d'hélice (3) ou d'une douille (4) montée sur celle-ci, cette lèvre étant comprimée élastiquement contre l'arbre ou la douille (4), l'ensemble comportant une chambre (16) située entre deux des anneaux d'étanchéité (12, 13) du premier type et étant raccordée à une gaine (18) dans laquelle peut être amené de façon continue de la graisse biodégradable par une pompe à déplacement positif (19) ayant une capacité telle qu'au moins la quantité de graisse, qui est rejetée dans l'eau, se trouve continuellement réapprovisionnée, caractérisé en ce qu'également l'autre anneau d'étanchéité (12) du premier type formant la chambre (16) comprend un corps (14) et une lèvre (15) s'étendant obliquement à partir du corps vers l'arbre d'hélice (3), les lèvres (15) des deux anneaux d'étanchéité du premier type (12, 13) étant dirigées de façon à pouvoir être relevées de l'arbre sous l'effet de la pression dans la chambre (16) et en ce qu'à travers l'anneau d'étanchéité (12) de la chambre (16), qui se situe le plus près de l'hélice (5), est prévue une gaine de dérivation (21) munie d'une soupape d'arrêt (22), qui est positionnée de telle sorte qu'à partir de la chambre (16) dans laquelle s'effectue l'alimentation de la graisse, cette dernière peut être déchargée dans une zone de trop-plein (20) et à partir de celle-ci par dessus bord dans l'eau.

2. Ensemble d'étanchéité selon la revendication 1, caractérisé en ce que la zone de trop-plein (20) communique avec l'eau à l'extérieur au moyen d'une gaine de dérivation (23) également munie d'une vanne d'arrêt (24) qui ne peut être ouverte qu'en direction de l'eau.

3. Ensemble d'étanchéité selon la revendication 1 ou 2, caractérisé en ce que les raccords de la gaine (21) ou des gaines (21, 23) de dérivation, comme cela est vu en section transversale, sont décalés l'un par rapport à l'autre et par rapport au raccord (17) d'alimentation de graisse dans la chambre (16).
